# EUROPEAN PATENT APPLICATION

(11) **EP 4 286 156 A1**
(43) Date of publication of application: **06.12.2023**
(21) Application number: 22177222.1
(22) Date of filing: 03.06.2022
(51) Int. Cl.: B32B 27/08, B32B 27/18, B32B 27/30, B32B 27/32, C08J 5/18, C08L 23/04

(54) **PET-FREE PACKAGE WITH PP-EVOH-PE-MULTILAYER STRUCTURE**

(71) Applicant: Borealis AG, 1020 Vienna (AT)
(72) Inventor: SEIER, Martina, 1040 Vienna (AT); ARCHODOULAKI, Vasiliki-Maria, 1040 Vienna (AT); DUSCHER, Bernadette, 4021 Linz (AT); NIEDERSÜß, Peter, 4021 Linz (AT); GAHLEITNER, Markus, 4021 Linz (AT)
(74) Representative: Maiwald GmbH

(57) **Abstract**

Multilayer film made of polymeric material comprising polypropylene, EVOH and polyethylene, package made therefrom and recycled material obtainable by mechanical recycling of said multilayer film.

## Description

### Field of the invention

The present invention relates to a multilayer film structure and packages for food packaging, particularly packages for food including a lid and a tray which can be subjected to mechanical recycling. It also relates to mechanically recycled compositions based on these structures and packages.

### Background

The market of foods for large-scale retail via supermarket chains and the like requires sophisticated packaging and packing materials, above all to increase the preservability of these foods and the aesthetic quality of the packages, for example with regard to the transparency of the container. One of the technical requirements of the food retail market is that of having available packages formed by a tray, or container, and by a top film or cover, which offer a suitable barrier to prevent oxygen from entering the tray to preserve the quality of the product contained therein. A known package commonly used on the market, includes a poly(ethylene terephthalate (PET) carrier (single or three-layer), to which there is applied a three-layer laminated film PE/EVOH/PE. Such package systems are commonly referred to as modified atmosphere packaging systems (MAP). The PET carrier makes recycling nearly impossible in any polyolefin stream, while the barrier film laminate (PE/EVOH/PE) makes recycling difficult and expensive in the PET stream. There was a deep felt need to have a package made from polymers being compatible in a way that simple shredding and re-extrusion of the mixed plastic results in compositions having reasonable mechanical performance.

It has been found that a packaging system for MAP with polymer-wise identical construction in tray and lid can be made by combining polypropylene support layers with a multilayer barrier system of LD/LLDPE and EVOH. The present invention is based on the surprising finding that a packaging system can be recycled mechanically.

### Summary of the invention

The present invention provides
a multilayer film made of polymeric material comprising polypropylene, EVOH and polyethylene in an amount of at least 96 wt.-%, preferably at least 98 wt.-% with respect to polymeric material, the multilayer film comprising four to eight layers: base layer **(BL)** / lamination layer **(LL)** / optional intermediate layer 1 **(IL1)** / optional tie layer 1 **(TL1)** / core layer **(CL)** / optional tie layer 2 **(TL2)** / optional intermediate layer 2 **(IL2)** / sealing layer **(SL),**
whereby none of the layers contains polyethylene therephthalate (PET)
   and
whereby the base layer **(BL)** comprises a polypropylene homopolymer and/or a random propylene copolymer;
   and
whereby the lamination layer **(LL)** comprises a low density polyethylene (LDPE1) or alternatively comprises a low density polyethylene (LDPE1) and a linear low density polyethylene (LLDPE1); and
whereby the optional intermediate layer 1 **(IL1)** comprises a linear low density polyethylene (LLDPE2);
   and
whereby the optional tie layer 1 **(TL1)** and the optional tie layer 2 **(TL2)** comprise a polar modified polyethylene selected from the group consisting of maleic anhydride grafted low density polyethylene (LDPE-g-MAH), maleic anhydride grafted linear low density polyethylene (LLDPE-g-MAH), or a combination thereof
   and
whereby the core layer **(CL)** comprises an ethylene vinyl alcohol copolymer (EVOH); and
whereby the optional intermediate layer 2 **(IL2)** comprises a linear low density polyethylene (LLDPE1) or alternatively comprises a linear low density polyethylene (LDPE1) and a further linear low density polyethylene (LLDPE2);
   and
whereby the sealing layer **(SL)** comprises a blend of a linear low density polyethylene (LLDPE1) and an ethylene-based plastomer.

The present invention further provides
a package comprising a tray and a lid being made from a multilayer film as described herein.

The present invention is further concerned with a
recycled material obtainable by mechanical recycling of the multilayer structure as described herein or by mechanical recycling of the package as described herein.

In the following the main preferred aspects of the present invention shall be described.

In a first preferred aspect, the polypropylene homopolymer and/or the random propylene copolymer comprised in the base layer **(BL)** has one or more of the following properties:
- a melt flow rate, MFR₂, from 1.5 to 15, preferably 2.0 to 12 g/10min (ISO1133; 2.16 kg; 230 °C)
- a melting temperature (DSC, ISO 11357) within the range of 154 to 166 °C, preferably in the range of 156 to 165 °C;
- a flexural modulus (ISO 178; measured on injection molded specimens, conditioned at 23°C) of at least 1300 MPa, preferably up to 2000 MPa.

It is more preferred that the polypropylene homopolymer and/or the random propylene copolymer comprised in the base layer **(BL)** has one or more of the following properties:
- a melt flow rate, MFR₂, from 5.0 to 10 g/10min (ISO1133; 2.16kg; 230°C)
- a melting temperature (DSC, ISO 11357) within the range of 156 to 163°C;
- a flexural modulus (ISO 178; measured on injection molded specimens, conditioned at 23°C) of at least 1300 MPa, preferably up to 2000 MPa.

Polypropylene homopolymer and random propylene copolymers meeting these requirements are readily available on the market.

It is most preferred that the base layer **(BL)** comprises the polypropylene homopolymer and/or the random propylene copolymer as described in an amount of at least 98 wt.-% with respect to the weight of the base layer.

In a further preferred aspect,
the low density polyethylene (LDPE1) comprised in the lamination layer **(LL)** has one or more of the following properties:
- a density (ISO 1183) of 918 to 929 kg/m³, preferably of 920 to 926 kg/m³,
- a melt flow rate, MFR₂, from 0.4 to 1.5 g/10min (ISO1133; 2.16kg; 190°C), preferably from 0.5 to 1.0 g/10min (ISO1133; 2.16kg; 190°C).

The low density polyethylene (LDPE1) comprised in the lamination layer **(LL)** is usually made by a high-pressure process without the use of a catalyst.

It is more preferred that
the low density polyethylene (LDPE1) comprised in the lamination layer **(LL)** has one or more of the following properties:
- a density (ISO 1183) of 920 to 926 kg/m³
- a melt flow rate, MFR₂, from 0.5 to 1.0 g/10min (ISO1133; 2.16kg; 190°C).

It is possible that the low density polyethylene (LDPE1) is present in an amount of at least 98 wt.-% with respect to the lamination layer **(LL).** However, in a second embodiment it is possible that the low density polyethylene (LDPE1) is present in an amount of only 40 to 60 wt.-% with respect to the lamination layer **(LL).**

In a preferred embodiment, the lamination layer **(LL)** comprises a linear low density polyethylene (LLDPE1) having one or more of the following properties:
- a density (ISO 1183) of 922 to 929 kg/m³;
- a melt flow rate from 0.8 to 1.8 g/10min (ISO1133; 2.16kg; 190°C);
- is metallocene derived;
- is an ethylene-1-butene-1-hexene terpolymer and
- is optionally present in an amount of 40 to 60 wt.-% with respect to the total weight of the lamination layer (LL).

It is more preferred that
the lamination layer **(LL)** comprises a linear low density polyethylene (LLDPE1) having one or more of the following properties:
- a density (ISO 1183) of 924 to 928 kg/m³;
- a melt flow rate from 0.9 to 1.6 g/10min (ISO1133; 2.16kg; 190°C);
- being metallocene derived;
- being an ethylene-1-butene-1-hexene terpolymer
- elongation at break (MD/TD) of at least 550%/650% and
- being optionally present in an amount of 40 to 60 wt.-% with respect to the total weight of the lamination layer (LL);

Linear low density polyethylenes (LLDPE1) having such properties are readily available on the market.

In yet a further preferred aspect, the linear low density polyethylene (LLDPE2) comprised in the intermediate layer 1 **(IL1)** has one or more of the following properties:
- a density (ISO 1183) of 926 to 934 kg/m³
- a melt flow rate from 0.5 to 1.6 g/10min (ISO1133; 5kg; 190°C)
- being a polyethylene alpha olefin terpolymer;
- being Ziegler-Natta derived, and
- being present in an amount of 60 to 100 wt.-% with respect to the total weight of the intermediate layer 1 **(IL1)**
and is optionally comprised in combination with a linear low density polyethylene (LLDPE1) having one or more of the following properties:
- a density (ISO 1183) of 922 to 929 kg/m³
- a melt flow rate from 0.8 to 1.8 g/10min (ISO1133; 2.16kg; 190°C);
- being metallocene derived.

It is more preferred that the linear low density polyethylene (LLDPE2) comprised in the intermediate layer 1 **(IL1)** has one or more of the following properties:
- a density (ISO 1183) of 929 to 933 kg/m³
- a melt flow rate from 0.6 to 1.2 g/10min (ISO1133; 5kg; 190°C)
- being a polyethylene alpha olefin terpolymer;
- being Ziegler-Natta derived, and
- being present in an amount of 60 to 100 wt.-% with respect to the total weight of the intermediate layer 1 **(IL1)**
and is optionally comprised in combination with a linear low density polyethylene (LLDPE1) having one or more of the following properties:
- a density (ISO 1183) of 924 to 928 kg/m³
- a melt flow rate from 0.9 to 1.6 g/10min (ISO1133; 2.16kg; 190°C)
- being metallocene derived.

In yet a further independently preferred aspect the ethylene vinyl alcohol copolymer (EVOH) yielding the core layer **(CL)** has one or more of the following properties:
- a density (ISO 1183) of 1190 to 1230 kg/m³
- a melt flow rate, MFR₂, from 0.5 to 5.0 g/10min (ISO1133; 2.16kg; 190°C)
- a melting temperature (DSC, ISO 11357) of 175°C or more, preferably up to 190°C.

It is particularly preferred that the ethylene vinyl alcohol copolymer (EVOH) yielding the core layer **(CL)** has one or more of the following properties:
- a density (ISO 1183) of 1190 to 1230 kg/m³
- a melt flow rate, MFR₂, from 0.5 to 2.5 g/10min (ISO1133; 2.16kg; 190°C)
- a melting temperature (DSC, ISO 11357) of 178°C or more, preferably up to 188°C.

It is even more preferred in a separate independent aspect that the ethylene vinyl alcohol copolymer (EVOH) has a tensile modulus of at least 4000 MPa (ISO 527). Ethylene vinyl alcohol copolymers (EVOH) having such characteristics are commercially available such as from Kuraray Co. Ltd, Japan under the trade name EVAL, or from Mitsubishi Chemicals, Japan, under the trade name Soarnol.

The ethylene vinyl alcohol copolymer (EVOH) based core layer (CL) is preferably encapsulated by two tie layers **(TL1, TL2)** made from a maleic anhydride grafted linear low density polyethylene (LLDPE-g-MAH).

More preferably the maleic anhydride grafted linear low density polyethylene (LLDPE-g-MAH) has one or more of the following properties:
- a density (ISO 1183) of 915 to 926 kg/m³
- a melt flow rate, MFR₂, from 1.0 to 4.0 g/10min (ISO1133; 2.16kg; 190°C)
- a Vicat softening temperature of 92 to 97 °C (ISO306); and
- a melting temperature (DSC, ISO 11357) of 118 to 128°C.

In yet a further preferred aspect, the linear low density polyethylene (LLDPE2) comprised in the intermediate layer 2 **(IL2)** has one or more of the following properties:
- a density (ISO 1183) of 926 to 934 kg/m³
- a melt flow rate, MFR₂, from 0.5 to 1.6 g/10min (ISO1133; 5kg; 190°C)
- being a polyethylene alpha olefin terpolymer and
- being optionally present in an amount of 60 to 100 wt.-% with respect to the total weight of the intermediate layer 2 **(IL2)**
and optionally is comprised in combination with a linear low density polyethylene (LLDPE1) having one or more of the following properties:
- a density (ISO 1183) of 922 to 929 kg/m³
- a melt flow rate, MFR₂, from 0.8 to 1.8 g/10min (ISO1133; 2.16kg; 190°C).

In a preferred embodiment the intermediate layer 2 **(IL2)** comprises the same polymers as intermediate layer 1 **(IL1).** It is also possible that intermediate layer 2 **(IL2)** is identical with intermediate layer 1 **(IL1).**

In yet a further and also preferred aspect, the polymer composition yielding the sealing layer **(SL)** comprises an antiblocking agent and optionally a slip agent.

It is further preferred that the linear low density polyethylene (LLDPE1) comprised in the sealing layer **(SL)** has one or more of the following properties:
- a density (ISO 1183) of 922 to 929 kg/m³
- a melt flow rate, MFR₂, from 0.8 to 1.8 g/10min (ISO1133; 2.16kg; 190°C), and
- being present in an amount of 30 to 50 wt.-% with respect to the polymer composition yielding the sealing layer **(SL).**

Preferably the sealing layer **(SL)** comprises a plastomer. Plastomers are well known components and are ethylene-alpha olefin copolymers, typically ethylene-1-butene or most preferably ethylene-1-octene copolymers.

More preferably, the plastomer comprised in the sealing layer **(SL)** has one or more of the following properties:
- a density (ISO 1183) of 870 to 910 kg/m³;
- a melt flow rate, MFR₂, from 0.5 to 1.5 g/10min (ISO1133; 2.16kg; 190°C),
- containing only monomer units derived from ethylene and 1-octene; and
- being present in an amount of 50 to 70 wt.-% with respect to the polymer composition yielding the sealing layer **(SL).**

In yet a further independent aspect, the multilayer film as described herein has layerthickness as follows:
- base layer **(BL)** from 50 to 350 micrometer, preferably 70 to 300 micrometer; and/or
- lamination layer **(LL)** from 5 to 50 micrometer, preferably 7 to 35 micrometer; and/or
- intermediate layer 1 **(IL1)** from 3 to 18 micrometer; and/or
- core layer **(CL)** from 3 to 15 micrometer; preferably 4 to 12 micrometer; and/or
- intermediate layer 2 **(IL2)** from 3 to 18 micrometer; and/or
- sealing layer **(SL)** from 5 to 50 micrometer, preferably 7 to 35 micrometer.

The present invention also concerns a package comprising a tray and a lid being made from a multilayer film as described herein. The tray is preferably made with the same layer structure as disclosed for the multilayer film. However, the base layer (BL) usually will have a thickness from 150 to 350 micrometer, preferably from 200 to 300 micrometer. It is self-explaining a package comprising a tray and a lid being made from a multilayer film without further materials involved is beneficial for recycling.

It is particularly preferred that polypropylene, EVOH and polyethylene amount to at least 96 wt.-%, preferably at least 98 wt.-% with respect to the package.

In yet a further aspect, the present invention concerns a recycled material obtainable by mechanical recycling of the multilayer structure or the package as described herein. Most preferably the recycled material is obtainable by mechanical recycling of the multilayer structure without any chemical purification.

Surprisingly such recycled material turned out to be a very valuable mixed polymer blend.

Preferably the recycled material according to the present invention has one or more of the following properties:
- a melt flow rate of 3.0 to 10 g/10 min (ISO1133; 2.16 kg; 230 °C);
- a tensile modulus (ISO 527, injection molded test specimen) of 1350 to 1800 MPa;
- a strain at break (ISO 527, injection molded test specimen) of at least 600%, preferably at least 700% and most preferably at least 800%.

### Component descriptions

The polypropylene homopolymer and/or the random propylene copolymer comprised in the base layer (BL) is preferably an isotactic polypropylene being based on a suitable Ziegler-Natta or single-site catalyst having one or more of the following properties:
- a melt flow rate, MFR₂, from 1.5 to 15, preferably 2.0 to 12 g/10min, more preferably from 5.0 to 10 g/10min (ISO1133; 2.16 kg; 230 °C)
- a melting temperature (DSC, ISO 11357) within the range of 154 to 166 °C , preferably in the range of 156 to 165 °C;
- a flexural modulus (ISO 178; measured on injection molded specimens, conditioned at 23°C) of at least 1300 MPa, preferably up to 2000 MPa, like in the range of 1400 to 1800 MPa.

Likewise preferably, the polypropylene homopolymer and/or the random propylene copolymer comprised in the base layer (BL) has a xylene cold soluble (XCS) fraction of less than 4.0 wt.-%, more preferably of less than 3.0 wt.-%.

In case a polypropylene homopolymer is selected, it is preferably characterized by a pentad isotacticity as determined by ¹³C nuclear magnetic resonance (NMR) spectroscopy of at least 95%. In case a random propylene copolymer is selected, it is preferably a propylene-ethylene random copolymer or a propylene-1-butene random copolymer having a comonomer content of less than 4 wt.-%.

Such polypropylene homopolymers and/or random propylene copolymers are commercially available, but they can also be produced in a single- or multi-reactor plant employing a suitable Ziegler-Natta or single-site catalyst. Suitable processes and/or polymers are for example described in EP 2960279 A1, EP 3184587 A1, EP 2535372 A1 and EP 2829556 B1.

Preferably, the low density polyethylene (LDPE1) comprised in the lamination layer (LL) is a long-chain branched LDPE from a high-pressure process without the use of a catalyst, having one or more of the following properties:
- a density (ISO 1183) of 918 to 929 kg/m³, preferably of 920 to 926 kg/m³,
- a melt flow rate, MFR2, from 0.4 to 1.5 g/10min, preferably from 0.5 to 1.0 g/10min (ISO1133; 2.16kg; 190°C).

Likewise preferably, the low density polyethylene (LDPE1) comprised in the lamination layer (LL) has a melting temperature (DSC, ISO 11357) in the range of 105 to 120 °C, more preferably in the range of 108 to 116 °C.

Such low density polyethylenes (LDPE1s) are commercially available, but they can also be produced in tubular or autoclave high pressure processes without the use of a catalyst as described by Jeremic (Polyethylene, in: Ullmann's Encyclopedia of Industrial Chemistry, 2014).

The linear low density polyethylene (LLDPE1) optionally present in an amount of 40 to 60 wt.-% in the lamination layer (LL) is preferably a metallocene derived ethylene-1-butene-1-hexene terpolymer having one or more of the following properties:
- a density (ISO 1183) of 922 to 929 kg/m³, more preferably of 924 to 928 kg/m³;;
- a melt flow rate from 0.8 to 1.8 g/10min, more preferably from 0.9 to 1.6 g/10min (ISO1133; 2.16kg; 190°C);
- an elongation at break (MD/TD) of at least 550%/650%.

Likewise preferably, the linear low density polyethylene (LLDPE1) optionally comprised in the lamination layer (LL) has a melting temperature (DSC, ISO 11357) in the range of 118 to 130 °C, more preferably in the range of 120 to 128 °C.

Linear low density polyethylenes (LLDPE1s) having such properties are readily available on the market, but they can also be produced in a multi-reactor plant employing a suitable metallocene catalyst. Suitable multimodal ethylene terpolymers are disclosed, for example, in WO 2016/083208. As far as definitions (such as for the "modality" of a polymer) and production methods for these ethylene terpolymers are concerned it is referred to WO 2016/083208.

The linear low density polyethylene (LLDPE2) present in an amount of 60 to 100 wt.- % in the intermediate layer 1 (IL1) is preferably a Ziegler-Natta catalyst derived polyethylene alpha olefin terpolymer having one or more of the following properties:
- a density (ISO 1183) of 926 to 934 kg/m³, preferably of 929 to 933 kg/m³,
- a melt flow rate from 0.5 to 1.6 g/10 min, more preferably from 0.6 to 1.2 g/10 min (ISO1133; 5kg; 190°C).

Likewise preferably, the linear low density polyethylene (LLDPE2) comprised in the intermediate layer 1 (IL1) has a melting temperature (DSC, ISO 11357) in the range of 122 to 132 °C, more preferably in the range of 124 to 130 °C. It is especially preferred that the melting temperature of the LLDPE2 is higher than the melting temperature of the LLDPE1. In a further independently preferred aspect, the density of the linear low density polyethylene LLDPE2 is higher than the density of the linear low density polyethylene LLDPE1.

Linear low density polyethylenes (LLDPE2s) having such properties are readily available on the market, but they can also be produced in a multi-reactor plant employing a suitable Ziegler-Natta catalyst. Suitable bimodal ethylene terpolymers are, for example, disclosed in WO 03/066698. As far as definitions (such as for the "modality" of a polymer) and production methods for these ethylene terpolymers are concerned it is referred to WO 03/066698.

The plastomer present in an amount of 50 to 70 wt.-% in the sealing layer (SL) is preferably an ethylene-alpha olefin copolymer, like an ethylene-1-butene or most preferably an ethylene-1-octene copolymer having one or more of the following properties:
- a density (ISO 1183) of 870 to 910 kg/m³, more preferably of 880 to 905 kg/m³;
- a melt flow rate, MFR2, from 0.5 to 1.5 g/10 min, more preferably from 0.6 to 1.3 g/10 min (ISO1133; 2.16kg; 190°C).

Likewise preferably, the plastomer comprised in the sealing layer (SL) has a melting temperature (DSC, ISO 11357) in the range of 65 to 105 °C, more preferably in the range of 75 to 100 °C. Most preferably, the plastomer contains only monomer units derived from ethylene and 1-octene.

Plastomers having such properties are readily available on the market, for example under the trade names Queo of Borealis (Austria), Engage of DOW Chemical (USA) or Exact of ExxonMobil (USA).

The ethylene vinyl alcohol copolymer (EVOH) yielding the core layer (CL) is preferably a saponified ethylene vinyl acetate copolymer from a high-pressure process without the use of a catalyst having one or more of the following properties:
- a density (ISO 1183) of 1190 to 1230 kg/m³,
- a melt flow rate, MFR2, from 0.5 to 5.0 g/10 min, more preferably from 0.5 to 2.5 g/10 min (ISO1133; 2.16kg; 190°C),
- a melting temperature (DSC, ISO 11357) of 175°C or more, more preferably of 178 °C or more, preferably up to 190°C, more preferably up to 188 °C.

It is even more preferred in a separate independent aspect that the ethylene vinyl alcohol copolymer (EVOH) has a tensile modulus of at least 4000 MPa (ISO 527). Ethylene vinyl alcohol copolymers (EVOHs) having such characteristics are commercially available such as from Kuraray Co. Ltd, Japan under the trade name EVAL, or from Mitsubishi Chemicals, Japan, under the trade name Soarnol.

The maleic anhydride grafted linear low density polyethylene (LLDPE-g-MAH) preferably yielding the optional tie layers (TL1, TL2) preferably has one or more of the following properties:
- a density (ISO 1183) of 915 to 926 kg/m³
- a melt flow rate, MFR2, from 1.0 to 4.0 g/10min (ISO1133; 2.16kg; 190°C)
- a Vicat softening temperature of 92 to 97 °C (ISO306); and
- a melting temperature (DSC, ISO 11357) of 118 to 128°C.

Maleic anhydride grafted linear low density polyethylenes (LLDPE-g-MAHs) having such characteristics are commercially available such as from SK Functional Polymer (France) under the trade name Orevac, from Byk Kometra (Germany) under the trade name Scona or from LyondellBasell (USA) under the trade name Lucalen.

### Experimental

### Measurement methods

### a) MFR₂ (230 °C for polypropylene polymers; 190°C for polyethylene polymers) is measured according to ISO 1133 (230 °C, 2.16 kg load).

### b) Tensile tests

The tensile modulus, the tensile strength and the elongation at break were measured at 23 °C according to ISO 527-2 (cross head speed 1 mm/min for tensile modulus, 50 mm/min for others) using injection moulded specimens moulded at 230 °C according to ISO 527-2(1B), produced according to EN ISO 1873-2 (dog 10 bone shape, 4 mm thickness).

### c) Melting temperature Tm and crystallization temperature Tc

The melting temperature Tₘ was determined by differential scanning calorimetry (DSC) according to ISO 11357-3 with a TA-Instruments 2920 Dual-Cell with RSC refrigeration apparatus and data station. A heating and cooling rate of 10 °C/min was applied in a heat/cool/heat cycle between +23 and +210 °C. The crystallization temperature (T_{c}) was determined from the cooling step, while melting temperature (Tₘ) and melting enthalpy (Hₘ) are being determined in the second heating step.

### d) Barrier performance (WVTR and OTR) of sheets

Both water vapor transmission rate - WVTR (38 °C; 90% relative humidity, RH) and oxygen transmission rate - OTR (23 °C; 100 % O2; 0 % RH) were measured on the sheets after at least 96 h conditioning time at standard lab conditions (23°C, 30-50% RH). For WVTR, ISO 15106-2:2003 was applied using an infrared sensor for detection. For OTR, ISO 15105-1:2007 with differential pressure method was applied."

### Examples

A multilayer film was prepared from polymers in Table 1, characterized by the parameters given in Table 2.

**Table 1 - Multilayer film construction and polymers**

| | |
|---|---|
| base layer **(BL)** | Borealis HD601CF |
| lamination layer **(LL)** | Borealis FT5230 (55 wt.-%) |
| | Borouge Anteo FK2715 (45 wt.-%) |
| intermediate layer 1 **(IL1)** | Borealis BorShape FX1001 (80 wt.-%) |
| | Borouge Anteo FK2715 (20 wt.-%) |
| tie layer 1 (**TL1**) | SK functional polymer Orevac 18632 |
| core layer **(CL)** | Kuraray Eval F171B |
| tie layer 2 **(TL2)** | SK functional polymer Orevac 18632 |
| intermediate layer 2 **(IL2)** | Borealis BorShape FX1001 (80 wt.-%) |
| | Borouge Anteo FK2715 (20 wt.-%) |
| sealing layer **(SL)** | Borouge Anteo FK2715 (38 wt.-%) |
| | Borealis Queo 0201FX (60 wt.-%) |
| | 2 wt.-% additives (slip agent / antiblocking agent) |

**Table 2 - Characteristics of polymers**

| Polymer | Type | MFR 2.16kg* | Density | Melting temperature | Flexural modulus |
|---|---|---|---|---|---|
| | | g/10 min | kg/m³ | °C | MPa |
| Borealis HD601CF | PP homopolymer | 8.0 | 900 | 162 | 1400 |
| Borealis FT5230 | LDPE | 0.75 | 923 | 112 | 350 |
| Borouge Anteo FK2715 | MC-LLDPE | 1.3 | 927 | 125 | n.d. |
| Borealis BorShape FX1001 | ZN-LLDPE | 0.9 | 931 | 127 | n.d |
| SK functional polymer Orevac 18632 | LLDPE-g-MAH | 2.3 | 920 | 123 | n.d.** |
| Kuraray Eval F171B | EVOH | 1.6 | 1190 | 183 | 4300 |

| | | | | | |
|---|---|---|---|---|---|
| * 230°C for PP, 190°C for PE & EVOH; ** Vicat Softening Temperature (ISO 306, 10 N) 95 °C | | | | | |

Layer thickness values are given in the following Table 3. The comparative examples were made with polyethylene terephthalate (PET) as known in the art.

**Table 3 - Multilayer construction and recyclate properties**

| | | **IE1** | **IE2** | **IE3** | **IE4** | **CE1** | **CE2** | **CE3** | **CE4** | **CE5** |
|---|---|---|---|---|---|---|---|---|---|---|
| Base layer | type | as described above | | | | | PET | PET | PET | PET |
| BL thickness | µm | 100 | 200 | 100 | 200 | 200 | 200 | 150 | 200 | 255 |
| Lamination layer | type | as described above | | | | - | as described above | | | - |
| LL thickness | µm | 10 | 10 | 15 | 15 | 0 | 10 | 10 | 10 | 0 |
| Intermediate layer 1 | type | as described above | | | | - | as desribed above | | | - |
| IL1 thickness | µm | 5 | 5 | 10 | 10 | 0 | 5 | 5 | 5 | 0 |
| Core layer | type | as described above | | | | - | as described above | | - | - |
| CL thickness | µm | 5 | 5 | 10 | 10 | 0 | 5 | 5 | 0 | 0 |
| Intermediate layer 2 | type | as described above | | | | - | as described above | | | - |
| IL2 thickness | µm | 5 | 5 | 10 | 10 | 0 | 5 | 5 | 5 | 0 |
| Sealing layer | type | as described above | | | | - | as described above | | | - |
| SL thickness | µm | 10 | 10 | 15 | 15 | 0 | 10 | 10 | 10 | 0 |
| Sheet (laminated) OTR 23°C / 0% rh WVTR 23°C / 85% rh | cm³/ m².d.bar | IE1 | IE2 | IE3 | IE4 | CE1 | CE2 | CE3 | CE4 | CE5 |
| | | 2.85 | 1.92 | 0.43 | 0.17 | 25.5 | 1.54 | 2.16 | 18.6 | 21.8 |
| | g/m².d | 0.21 | 0.11 | 0.17 | 0.11 | 0.13 | 1.13 | 1.23 | 1.36 | 1.53 |
| Tensile mod. | MPa | 1773 | 1860 | 1752 | 1844 | 1900 | 3395 | 1676 | 2850 | 3021 |
| Strain at break | % | 7 | 11 | 9 | 11 | 8 | 120 | 63 | 50 | 72 |
| Fmax (puncture) | N | 40 | 82 | 44 | 92 | 74 | 107 | 36 | 32 | 45 |
| Mechanically recycled mixture (IM) | | | | | | | | | | |
| MFR PP 220°C | g/10min | 6.8 | 6.2 | 7.9 | 7.3 | 5.4 | - | - | - | - |
| MFR PET 275°C | g/10min | - | - | - | - | - | 17.4 | 14.3 | 20.1 | 22.5 |
| Tensile mod. | MPa | 1485 | 1865 | 1455 | 1724 | 1866 | 2096 | 1830 | 2112 | 2434 |
| Strain at break | % | 845 | 779 | 625 | 844 | 800 | 25 | 23 | 31 | 320 |

All multilayer structures were shredded and re-extruded in a conventional twin-screw extruder.

It can be seen that the multilayer structure had reasonable OTR and WVTR performance as well as acceptable tensile properties. After mechanical recycling (i.e. shredding and re-extrusion) the inventive examples showed outstanding strain at break rendering the mixedplastic an attractive material for numerous applications.

## Claims

1. Multilayer film made of polymeric material comprising polypropylene, EVOH and polyethylene in an amount of at least 96 wt.-%, preferably at least 98 wt.- % with respect to polymeric material, the multilayer film comprising four to eight layers:
base layer **(BL)** / lamination layer **(LL)** / optional intermediate layer 1 **(IL1)** / optional tie layer 1 **(TL1)** / core layer **(CL)** / optional tie layer 2 **(TL2)** / optional intermediate layer 2 **(IL2)** / sealing layer **(SL),**
whereby none of the layers contains polyethylene terephthalate (PET)
and
whereby the base layer **(BL)** comprises a polypropylene homopolymer and/or a random propylene copolymer;
and
whereby the lamination layer **(LL)** comprises a low density polyethylene (LDPE1) or alternatively comprises a low density polyethylene (LDPE1) and a linear low density polyethylene (LLDPE1); and
whereby the optional intermediate layer 1 **(IL1)** comprises a linear low density polyethylene (LLDPE2);
and
whereby the optional tie layer 1 **(TL1)** and the optional tie layer 2 **(TL2)** comprise a polar modified polyethylene selected from the group consisting of maleic anhydride grafted low density polyethylene (LDPE-g-MAH), maleic anhydride grafted linear low density polyethylene (LLDPE-g-MAH), or a combination thereof
and
whereby the core layer **(CL)** comprises an ethylene vinyl alcohol copolymer (EVOH);
and
whereby the optional intermediate layer 2 **(IL2)** comprises a linear low density polyethylene (LLDPE1) or alternatively comprises a low density polyethylene (LDPE2) and a further linear low density polyethylene (LLDPE2);
and
whereby the sealing layer **(SL)** comprises a blend of a linear low density polyethylene (LLDPE1) and an ethylene-based plastomer.

2. Multilayer film according to claim 1, wherein the polypropylene homopolymer and/or the random propylene copolymer comprised in the base layer **(BL)** has one or more of the following properties:
- a melt flow rate, MFR₂, from 1.5 to 15, preferably 2.0 to 12 g/10min (ISO1133; 2.16kg; 230°C)
- a melting temperature (DSC, ISO 11357) within the range of 154 to 166°C; preferably in the range of 156 to 165°C;
- a flexural modulus (ISO 178; measured on injection molded specimens, conditioned at 23°C) of at least 1300 MPa, preferably up to 2000 MPa.

3. Multilayer film according to claim 1 or claim 2, wherein the low density polyethylene (LDPE1) comprised in the lamination layer **(LL)** has one or more of the following properties:
- a density (ISO 1183) of 918 to 929 kg/m³
- a melt flow rate, MFR₂, from 0.4 to 1.5 g/10min (ISO1133; 2.16kg; 190°C).

4. Multilayer film according to any one of the preceding claims wherein the linear low density polyethylene (LLDPE1) optionally comprised in the lamination layer **(LL)** has one or more of the following properties:
- a density (ISO 1183) of 922 to 929 kg/m³;
- a melt flow rate from 0.8 to 1.8 g/10min (ISO1133; 2.16kg; 190°C);
- is metallocene derived;
- is an ethylene-1-butene-1-hexene terpolymer and
- is optionally present in an amount of 40 to 60 wt.-% with respect to the total weight of the lamination layer (LL).

5. Multilayer film according to any one of the preceding claims wherein the linear low density polyethylene (LLDPE2) comprised in the intermediate layer 1 **(IL1)** has one or more of the following properties:
- a density (ISO 1183) of 926 to 934 kg/m³
- a melt flow rate from 0.5 to 1.6 g/10min (ISO1133; 5kg; 190°C)
- being a polyethylene alpha olefin terpolymer;
- being Ziegler-Natta derived, and
- being present in an amount of 60 to 100 wt.-% with respect to the total weight of the intermediate layer 1 **(IL1)**
and is optionally comprised in combination with a linear low density polyethylene (LLDPE1) having one or more of the following properties:
- a density (ISO 1183) of 922 to 929 kg/m³;
- a melt flow rate from 0.8 to 1.8 g/10min (ISO1133; 2.16kg; 190°C);
- being metallocene derived.

6. Multilayer film according to any one of the preceding claims wherein the ethylene vinyl alcohol copolymer (EVOH) yielding the core layer **(CL)** has one or more of the following properties:
- a density (ISO 1183) of 1190 to 1230 kg/m³
- a melt flow rate, MFR₂, from 0.5 to 5.0 g/10min (ISO1133; 2.16kg; 190°C)
- a melting temperature (DSC; ISO11357) of 175°C or more, preferably up to 190°C.

7. Multilayer film according to claim 6, whereby the ethylene vinyl alcohol copolymer (EVOH) based core layer **(CL)** is encapsulated by two tie layers **(TL1, TL2)** made from a maleic anhydride grafted linear low density polyethylene (LLDPE-g-MAH).

8. Multilayer film according to any one of the preceding claims wherein the linear low density polyethylene (LLDPE2) comprised in the intermediate layer 2 **(IL2)** has one or more of the following properties:
- a density (ISO 1183) of 926 to 934 kg/m³
- a melt flow rate, MFR₂, from 0.5 to 1.6 g/10min (ISO1133; 5kg; 190°C)
- being a polyethylene alpha olefin terpolymer and
- being optionally present in an amount of 60 to 100 wt.-% with respect to the total weight of the intermediate layer 2 **(IL2)**
and optionally is comprised in combination with a linear low density polyethylene (LLDPE1) having one or of the following properties:
- a density (ISO 1183) of 922 to 929 kg/m³
- a melt flow rate, MFR₂, from 0.8 to 1.8 g/10min (ISO1133; 2.16kg; 190°C).

9. Multilayer film according to any one of the preceding claims wherein the polymer composition yielding the sealing layer **(SL)** comprises an antiblocking agent and optionally a slip agent.

10. Multilayer film according to any one of the preceding claims, wherein the linear low density polyethylene (LLDPE1) comprised in the sealing layer **(SL)** has one or more of the following properties:
- a density (ISO 1183) of 922 to 929 kg/m³,
- a melt flow rate, MFR₂, from 0.8 to 1.8 g/10min (ISO1133; 2.16kg; 190°C), and
- being present in an amount of 30 to 50 wt.-% with respect to the polymer composition yielding the sealing layer **(SL).**

11. Multilayer film according to any one of the preceding claims, wherein the plastomer comprised in the sealing layer **(SL)** has one or more of the following properties:
- a density (ISO 1183) of 870 to 910 kg/m³;
- a melt flow rate, MFR₂, from 0.5 to 1.5 g/10min (ISO1133; 2.16kg; 190°C),
- containing only monomer units derived from ethylene and 1-octene; and
- being present in an amount of 50 to 70 wt.-% with respect to the polymer composition yielding the sealing layer **(SL).**

12. Multilayer film, whereby the layer thickness are as follows:
- base layer **(BL)** from 50 to 350 micrometer, preferably 70 to 300 micrometer; and/or
- lamination layer **(LL)** from 5 to 50 micrometer, preferably 7 to 35 micrometer; and/or
- intermediate layer 1 **(IL1)** from 3 to 18 micrometer; and/or
- core layer **(CL)** from 3 to 15 micrometer; preferably 4 to 12 micrometer; and/or
- intermediate layer 2 **(IL2)** from 3 to 18 micrometer; and/or
- sealing layer **(SL)** from 5 to 50 micrometer, preferably 7 to 35 micrometer.

13. Package comprising a tray and a lid being made from a multilayer film of any one of claims 1 to 12.

14. Package according to claim 13, wherein polypropylene, EVOH and polyethylene amount to at least 96 wt.-%, preferably at least 98 wt.-% with respect to the package.

15. Recycled material obtainable by mechanical recycling of the multilayer film according to any one of claims 1 to 12 or the package according to claims 13 or 14, preferably having one or more of the following properties:
- a melt flow rate of 3.0 to 10 g/10 min (ISO1133; 2.16 kg; 230°C);
- a tensile modulus (ISO 527, injection molded test specimen) of 1350 to 1800 MPa;
- a strain at break (ISO 527, injection molded test specimen) of at least 600%, preferably at least 700% and most preferably at least 800%.
